# EUROPEAN PATENT SPECIFICATION

(11) **EP 3 904 725 B1**
(45) Date of publication and mention of the grant of the patent: **19.08.2026**
(21) Application number: 21168839.5
(22) Date of filing: 16.04.2021
(51) Int. Cl.: F16H 19/00, F16K 31/04, F16K 31/53, F16H 1/20, F16H 1/12, H02K 7/116

(54) **GEAR TRAIN FOR A VALVE ACTUATOR**
GETRIEBEZUG FÜR EINEN VENTILTRIEB
TRAIN D'ENGRENAGES POUR UN ACTIONNEUR DE SOUPAPE

(30) Priority: 01.05.2020 EP 20172618
(43) Date of publication of application: 03.11.2021
(73) Proprietor: Illinois Tool Works, Inc., Glenview, Illinois 60025 (US)
(72) Inventor: MARTIN, Lionel, Glenview, 60025 (US); RICHARD, Didier, Glenview, 60025 (US)
(74) Representative: HGF

(56) References cited:
- EP-A1- 0 617 214
- EP-A1- 1 369 564
- EP-A1- 3 536 935
- EP-B1- 0 617 214
- WO-A1-01/71220
- DE-A1- 10 057 836
- DE-A1- 102007 061 996
- DE-A1- 19 902 434
- GB-A- 2 510 189

## Description

### Technical Field of Invention

The invention relates to a gear train for an valve actuator. In particular, the invention relates to a gear train for a valve actuator that includes a motor and a valve shaft, wherein the gear train rotationally couples the motor to the valve shaft. The invention further relates to a valve actuator.

### Background

A valve actuator includes a motor arranged to rotate a valve via a gear train. When the rotational axis of the valve is perpendicular to the rotational axis of the motor it is known to use a worm gear arrangement to translate rotation from the motor to the valve.

DE 10057836 discusses a drive having an electric motor arranged in a housing that drives an output shaft via a gearbox.

EP 1 369 564 A1 discusses an angular motion driving mechanism characterized by a flexible end stop being constituted by a first member structurally fixated to a gear wheel.

### Summary

According to the present invention, there is provided a gear train for a valve actuator that includes a motor and a valve shaft in accordance with the appended claims. The gear train is configured to rotationally couple the motor to the valve shaft. The objective is achieved by a gear train for a valve actuator as described in claim 1.

In examples, the pinion gear arrangement comprises an intermediate gear having a first gear portion arranged to engage a pinion gear of the face gear, and a second gear portion arranged to engage the output gear.

In other examples, the pinion gear arrangement comprises a direct engagement between the face gear and the output gear. Each of the face gear and the output gear comprise a pinion gear portion that are arranged to engage each other. In examples, the pinion gear, the first gear portion, and the second gear portion each comprise a spur gear. In other examples, the pinion gear, the first gear portion, and the second gear portion each comprise a helical gear.

In examples, the output gear comprises a gear sector extending only partly about a circumference of the output gear. For example, the gear sector extends around about 50% of the circumference of the output gear. In another example, the gear sector extends around about 25% of the circumference of the output gear.

In examples, the gear train is configured to provide a gear ratio between the motor gear and the output gear of between approximately 1:3 and approximately 1:1000, for example about 1:40.

In examples, the output gear comprises a recess for engaging a return spring arranged to act between the recess and a housing of the valve actuator to urge the output gear and valve shaft in a rotational direction. In examples, the return spring may be a torsion spring.

The output gear comprises one or more end stops arranged to engage a housing of the valve actuator to limit rotation of the output gear and valve shaft.

According to a further aspect of the present invention there is also provided a valve actuator comprising a motor, a valve shaft, and a gear train as described above.

In examples, the valve shaft may comprise a magnet, and the valve actuator may further comprise a sensor arranged to detect the rotational position of the valve shaft by detecting the magnet.

The invention provides advantageous torque transmission and gear tooth wear, allowing a smaller, less powerful motor to be used in the valve actuator, and improving the longevity of the valve actuator.

### Brief Description of Drawings

Example embodiment(s) of the invention are illustrated in the accompanying drawings, in which:
**Figure 1** illustrates a perspective view of a valve actuator including a gear train with a face gear;
**Figure 2** illustrates a top view of the valve actuator of Figure 1;
**Figure 3** schematically illustrates the motor gear and the face gear of the gear train of Figures 1 and 2;
**Figure 4** schematically illustrates the face gear and an intermediate gear of the gear train of Figures 1 and 2;
**Figure 5** schematically illustrates the intermediate gear and an output gear of the gear train of Figures 1 and 2;
**Figure 6** illustrates the output gear of the gear train of Figures 1 and 2, including the valve shaft; This illustrated example does not constitute an embodiment of the invention but merely serves an illustrative purpose;
**Figure 7** illustrates an alternative output gear of the gear train of Figures 1 and 2, including the valve shaft; and
**Figure 8** illustrates the valve shaft of the valve actuator of Figures 1 and 2.

### Description

The illustrated example embodiments relate to a gear train for a valve actuator for actuating a valve. The valve actuator includes a motor and a valve shaft that engages the valve. The gear train is engaged between the motor and the valve shaft such that rotation of the motor drives rotation of the valve shaft via the gear train.

The valve actuator may be used for coolant systems, air management systems such as an intake air management system, an exhaust gas recirculation (EGR) system, and/or an air throttle system. The valve actuator may alternatively be used as an acoustic actuator for an exhaust system, or for a turbocharger system (preferably a turbocharger with variable turbine geometry), for a grille shutter, or, more broadly, all other actuators with an "L-shape" architecture (i.e. with an output axis perpendicular to the motor rotational axis).

However, it will be appreciated that the gear train and valve actuator described herein may be suitable for other applications, particularly where the rotational axis of the valve shaft is perpendicular to the rotational axis of the motor.

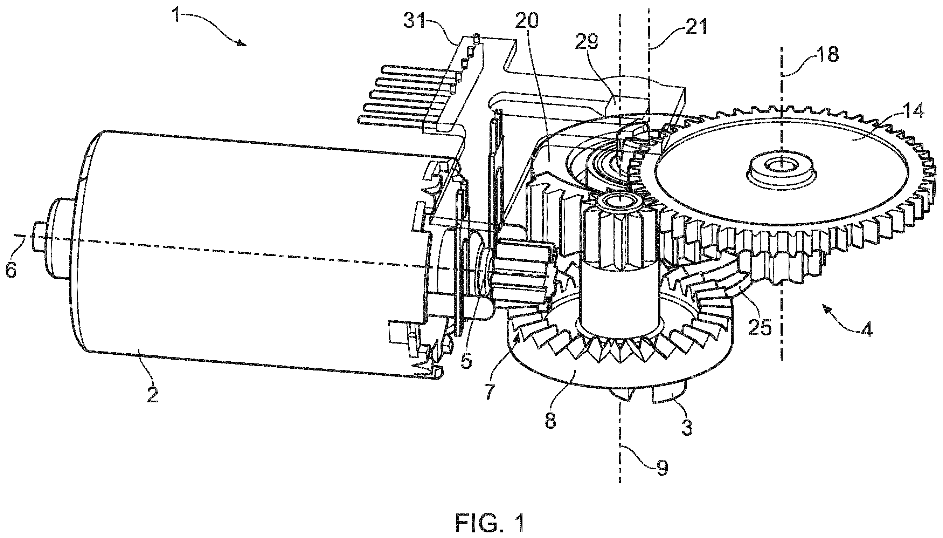

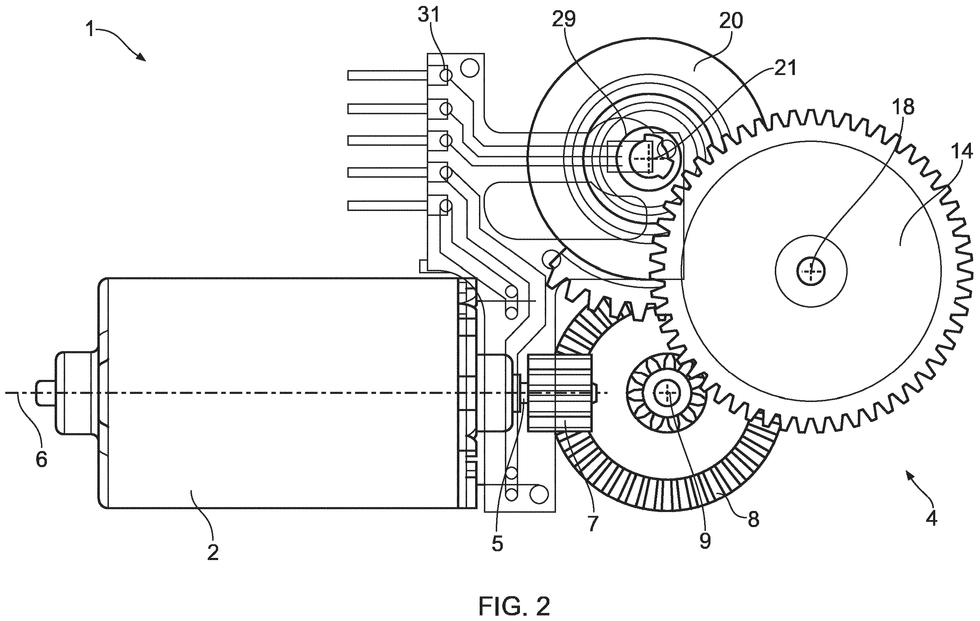

As shown in Figures 1 and 2, the valve actuator 1 includes a motor 2, a valve shaft 3, and a gear train 4 that rotationally couples the motor 2 to the valve shaft 3. The motor 2, valve shaft 3, and gear train 4 are housed in a housing (not shown). In particular, the motor 2 is fixed to the housing, and at least some of the gears of the gear train 4 are rotationally mounted to the housing, as further described hereinafter. The gears of the gear train 4 may be rotationally mounted to the housing by bearings or bushings to permit rotation of the gears relative to the housing. Alternatively, the guiding elements of the gears (shafts or bores) may be formed integrally with the housing and therefore be made of the same material as the housing.

The motor 2 is an electric motor, for example a DC motor such as a DC brushed or brushless motor. Alternatively, the electric motor may be an AC motor, such as an AC brushed or brushless motor. In examples, the electric motor may be a servo motor or a stepper motor. The motor 2 may operate on a low voltage power supply, for example about 6 volts or about 12 volts or about 18 volts.

The motor 2 includes control connections 31 for providing power and/or control signals for activating the motor 2.

The motor 2 has a motor shaft 5 that rotates about motor rotational axis 6. The gear train 4 includes a motor gear 7 that is mounted to the motor shaft 5 and is rotated by the motor 2 about motor rotational axis 6. The gear train 4 further includes a face gear 8 and an output gear 20 for transferring the rotational force of the motor 2 to the valve shaft 3, as described in detail hereinafter. In preferred examples, an intermediate gear 14 is disposed between the face gear 8 and the output gear 20.

The face gear 8 is arranged to engage the motor gear 7, as also shown in Figures 1, 2 and 3. The face gear 8 is mounted to the housing for rotation about face gear axis 9. The face gear axis 9 is perpendicular to the motor rotational axis 6.

The face gear 8 comprises a face gear portion 10 comprising teeth on an axially directed face 11 of the face gear 8. In particular, the face gear portion 10 is formed about a radial edge of the axially directed face 11 of the face gear 8. The face gear portion 10 engages the motor gear 7, such that rotation of the motor shaft 5 drives rotation of the face gear 8 about the face gear axis 9 via the motor gear 7 and the face gear portion 10. In this way, rotation of the motor 2 is transmitted to a perpendicular axis, i.e. the face gear rotational axis 9.

Preferably, the motor gear 7 is a spur gear and the face gear portion 10 comprises gear teeth configured to engage the motor gear 7. In other embodiments, the motor gear 7 may be a helical gear, and the face gear portion 10 may comprise helical gear teeth configured to engage the motor gear 7.

The face gear portion 10 has a greater effective diameter than the motor gear 7, defining a gear ratio (motor gear 7 : face gear 8) of approximately 0.4 (i.e. about 1:2.58).

However, it will be appreciated that the gear ratio between the motor gear 7 and the face gear 8 may be in the range of approximately 0.1 (i.e. about 1:10) to approximately 0.7 (i.e. about 1:1.5).

As illustrated in Figures 1 to 4, the face gear 8 further comprises an axial protrusion 12 comprising a pinion gear 13. The pinion gear 13 comprises gear teeth 15 formed about a radial surface 16 of the axial protrusion 12.

In a preferred embodiment, the pinion gear 13 of the face gear 8 is arranged to engage a first gear portion 17 of the intermediate gear 14 of the gear train 4. The intermediate gear 14 is mounted to the housing (not shown) for rotation about intermediate gear axis 18. As will be appreciated, intermediate gear axis 18 is parallel to face gear axis 9 and perpendicular to motor rotational axis 6.

Preferably, the pinion gear 13 of the face gear 8 is a spur gear, and the first gear portion 17 of the intermediate gear 14 comprises a spur gear arranged to engage the pinion gear 13. However, in alternative examples the pinion gear 13 of the face gear 8 is a helical gear, and the first gear portion 17 of the intermediate gear 14 comprises a helical gear arranged to engage the pinion gear 13.

The pinion gear 13 of the face gear 8 has a smaller effective diameter than the first gear portion 17 of the intermediate gear 14, defining a gear ratio (pinion gear 13 : first gear portion 14) of approximately 0.25 (i.e. about 1:4). However, it will be appreciated that the gear ratio between the pinion gear 13 of the face gear 8 and the first gear portion 17 of the intermediate gear 14 may be in the range of approximately 0.1 (i.e. about 1:10) to approximately 0.7 (i.e. about 1:1.5).

In this way, rotation of the motor shaft 5 drives rotation of the intermediate gear 14 via the motor output gear 7 and the face gear 8.

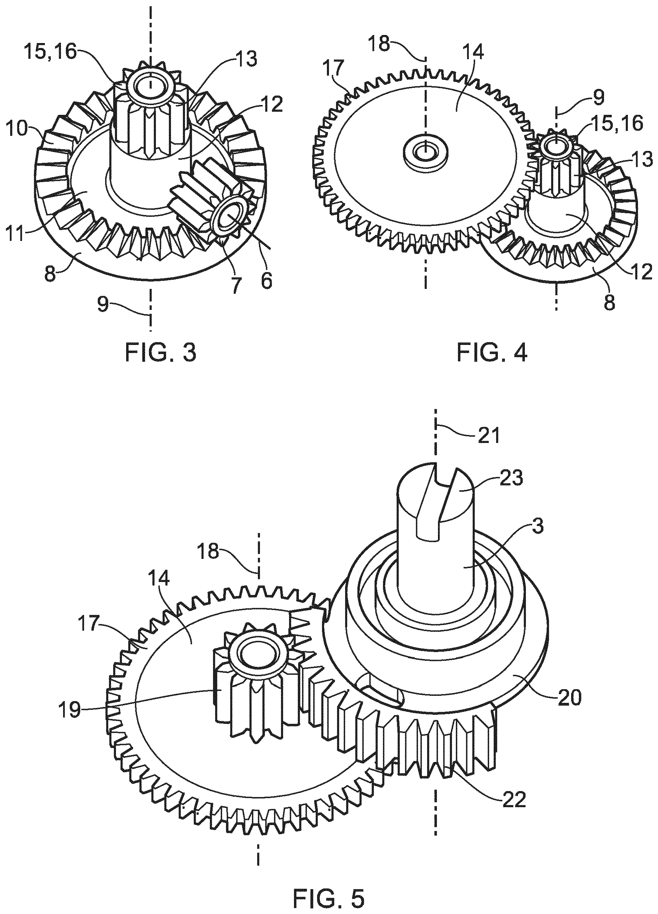

As illustrated in Figures 1 and 5, the intermediate gear 14 further comprises a second gear portion 19. The second gear portion 19 is a pinion gear extending from an axial face of the intermediate gear 14.

The second gear portion 19 is arranged to engage the output gear 20 of the gear train 4. The output gear 20 includes a gear sector 22 that extends partially about a radial surface of the output gear 20 and is engaged by the second gear portion 19 of the intermediate gear 14. The output gear 20 is attached to the valve shaft 3 for actuating the valve. Additionally, the output gear 20 may be mounted to the housing for rotation. The output gear 20 rotates about output gear axis 21. As will be appreciated, the output gear axis 21 is parallel to face gear axis 9 and the intermediate gear axis 18, and perpendicular to motor rotational axis 6.

Preferably, the second gear portion 19 of the intermediate gear 14 is a spur gear, and the gear sector 22 of the output gear 20 comprises a partial spur gear arranged to engage the second gear portion 19. However, in alternative examples the second gear portion 19 of the intermediate gear 14 is a helical gear, and the gear sector 22 of the output gear 20 comprises a partial helical gear arranged to engage the second gear portion 19. In alternative examples the output gear 20 may comprise a full circumferential gear (rather than the sector gear illustrated), and optionally a helical gear.

The second gear portion 19 of the intermediate gear 14 has a smaller effective diameter than the gear sector 22 of the output gear 20, defining a gear ratio (second gear portion 19 : gear sector 22) of approximately 0.25 (i.e. about 1:4). However, it will be appreciated that the gear ratio between the second gear portion 19 of the intermediate gear 14 and the gear sector 22 of the output gear 20 may be in the range of approximately 0.1 (i.e. about 1:10) to approximately 0.7 (i.e. about 1:1.5).

In this way, rotation of the motor shaft 5 drives rotation of the output gear 20 via the motor gear 7, the face gear 8, and the intermediate gear 14.

In an alternative example, not illustrated, the pinion gear 13 of the face gear 8 directly engages the output gear 20, and there is no intermediate gear 14. The intermediate gear 14 advantageously provides additional gearing between the motor 2 and the valve shaft 3, but this may not be essential in some circumstances.

As illustrated in Figures 1, 2 and 5, the output gear 20 is coupled to the valve shaft 3, such that rotation of the output gear 20 causes rotation of the valve shaft 3. The valve shaft 3 has a valve engaging portion 23 that is adapted to move a valve member (not illustrated) to alter an operational status of the valve (e.g. open, closed, or partially open). In an alternative example, the valve shaft 3 comprises the valve member - i.e. the part that moves to open/close the valve. In examples, the valve may be a ball valve, a butterfly valve, a gate valve or other type of valve.

As illustrated, the gear sector 22 of the output gear 20 extends around approximately 25% of the circumference of the output gear 20, i.e., about 90 degrees of the circumference of the output gear 20. Accordingly, the valve actuator 1, and in particular the gear train 4, is configured to rotate the valve shaft 3 through a maximum of about 90 degrees of rotation to actuate the valve - e.g., to move the valve between an open position and a closed position. It will be appreciated that the gear sector 22 of the output gear 20 may extend around between about 15% and 50% of the circumference of the output gear 20 for a corresponding rotation, according to the requirements of the valve being actuated. However, in some examples the gear sector 22 of the output gear 20 may extend around the entire circumference of the output gear 20.

In the preferred example described herein, the gear train 4 provides a gear ratio between the motor shaft 5 and the valve shaft 3 (motor shaft 5 : valve shaft 3) of about 1:40. Accordingly, if a 90 degree rotation of the valve shaft 3 is required to actuate the valve, then the motor shaft 5 is rotated approximately 10 times. However, it will be appreciated that the gear ratios of the gear train 4 may vary, giving a range of overall gear ratio between the motor shaft 5 and the valve shaft 3 (motor shaft 5 : valve shaft 3) of between approximately 1:3 and approximately 1:1000.

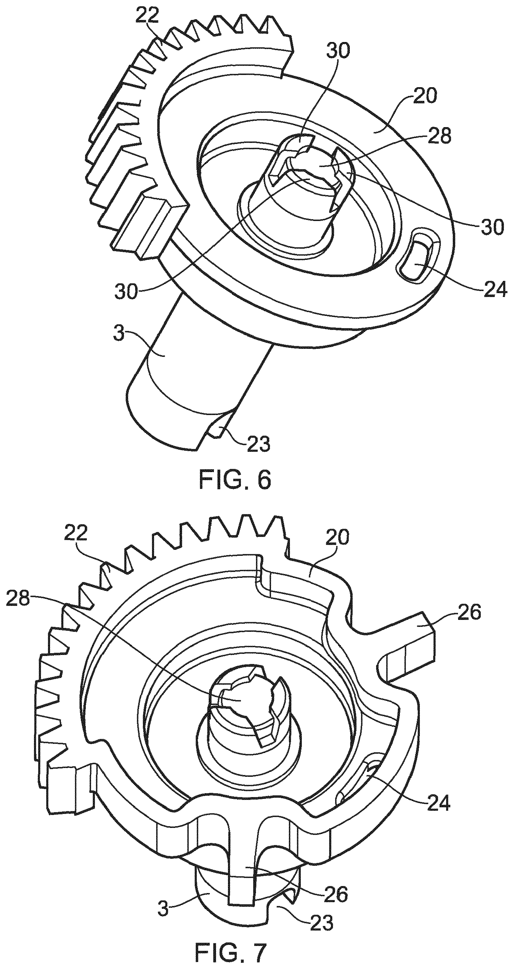

As illustrated in Figure 6, the output gear 20 comprises a recess 24 for a return spring, in particular a torsion spring (25, see Figures 1 and 2). The return spring 25 is a torsion spring disposed about the output gear axis 21, having one end engaged with the housing of the valve actuator 1 and the other end engaged with the recess 24 of the output gear 20. The torsion spring 25 acts to urge the output gear 20 and valve shaft 3 in one rotational direction, for example towards a valve open or valve closed position. Alternatively, the return spring may be a non-torsion spring, for example an extension spring, arranged to act between the housing and the output gear 20 to urge the output gear 20 and valve shaft 3 in one rotational direction, for example towards a valve open or valve closed position.

Operation of the valve actuator 1 may comprise activating the motor 2 to rotate the valve shaft 3 from a closed position to an open position, or vice versa, and then deactivating the motor 2 such that the return spring 25 returns the valve to the closed or open position, correspondingly. In other examples, the motor 2 may be activated to rotate the valve shaft 3 in both directions (i.e. open to closed, and closed to open), and the return spring 25 is provided as a failsafe to move the valve to a closed position in case of power loss or failure of the motor 2 or gear train 4. In other examples, the motor 2 may be activated in a single direction only to rotate valve in one direction through open and closed positions.

As illustrated in Figure 7, the output gear 20 comprises one or more end stops 26, in this example two end stops 26. The end stops 26 engage a portion of the housing at, or close to, the maximum rotational positions of the valve shaft 3, to prevent over rotation of the valve shaft 3. Additionally, the end stops 26 are arranged to prevent the gear train 4 from the impact torque which occurs when reaching the counter end stops of the housing. If the impact torque applied to the gear train 4 is too high it may damage one or more of the gears 7, 8, 14, 20, in particular gear teeth. The end stops 26 are provided to limit the angular stroke of the valve and are configured to prevent gear train 4 failure. The end stops 26 are configured to absorb rotational force of the gear train 4 by deforming on contact with the housing. The end stops 26 are resiliently deformable (i.e. act elastically) so that they do not permanently deform or break under normal operating conditions. Therefore, the end stops 26 are configured to provide a soft limit to rotation of the gear train 4 and the valve shaft 3 and also absorb kinetic energy from the motor rotor.

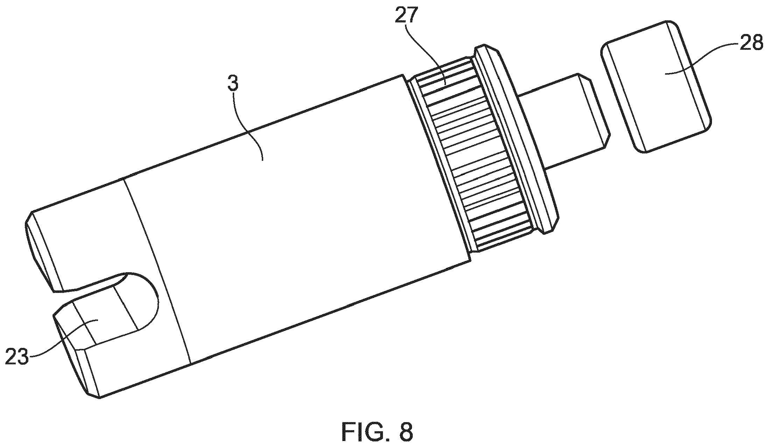

Figure 8 illustrates an example valve shaft 3. The valve shaft 3 includes a valve engagement portion 23. The valve shaft 3 also includes a gear mounting portion 27 for attachment of the valve shaft 3 to the output gear 20. In this example, the gear mounting portion comprises a knurled section 27 for gripping a bore of the output gear 20. One or more fasteners, for example a circlip or nut, may additionally or alternatively be used to attach the valve shaft 3 to the output gear 20.

Also illustrated in Figures 6 to 8, the valve shaft 3 may optionally include a magnet 28 mounted to an end of the valve shaft 3 that is attached to the output gear 20. The magnet is preferably overmoulded on the valve shaft 3, or the valve shaft 3 is overmoulded onto the magnet 28, although a fastener may be used in alternative examples. The output gear 20 may include moulded supports 30 for supporting the magnet 28 on the end of the valve shaft 3. The magnet 28 may be retained between the valve shaft 3 and the output gear 20.

The magnet 28 is arranged to be detected by the sensor 29 (see FIGS. 1 and 2). The sensor 29 preferably detects a relative position of the magnet 28 by the Hall effect. The sensor 29 detects the rotational position of the valve shaft 3 by detecting the magnet 28. The sensor 29 is mounted to the housing and comprises a sensor disposed adjacent to the magnet 28 and arranged to detect rotation of the valve shaft 3 using the magnet 28. As the valve shaft 3 is coupled directly to the valve via the valve engaging portion 23, the sensor 29 can thereby determine the position of the valve irrespective of the motor 2 and gear train 4, and can therefore also be used to detect failure of the motor 2 and/or gear train 4.

The valve actuator 1 described herein finds particular application in smaller, low power valve actuators, such as in an air management system such as an intake air management system, an exhaust gas recirculation (EGR) system, and/or an air throttle system. Alternatively, the valve actuator 1 may be used as an acoustic actuator for an exhaust system, or for a turbocharger system (preferably a turbocharger with variable turbine geometry), for a grille shutter, or, more broadly, all other actuators with an "L-shape" architecture (i.e. with an output axis perpendicular to the motor rotational axis).

In one particular example, the motor 2 generates approximately 30N.mm at 5000 RPM during normal operation. Such a motor 2 may have a size of approximately 50 mm in length and 30 mm in diameter. Allowing for efficiency losses, the disclosed valve actuator 1 (with a gear train having a gear ratio of between about 20:1 and about 80:1) would generate between 500N.mm and 1500N.mm of torque on the valve shaft 3, which is suitable for actuating small valves such as a coolant valve or an EGR valve.

Compared to a worm gear arrangement that is typically used in an application where the rotational axis of the motor is perpendicular to the rotational axis of the valve, the disclosed valve actuator 1, in particular the gear train 4, achieves more efficient torque transfer, allowing a smaller or less powerful motor 2 to be used. In addition, the disclosed gear train 4 will experience lower gear tooth wear than a worm gear arrangement, which inherently generates higher sliding contact due to higher contact pressure between teeth and thread of the worm. Therefore, the materials of the gears 7, 8, 14, 20 of the gear train 4 can be lighter than an equivalent worm gear arrangement for the same longevity in particular for applications operating under the hood at high temperature (from 120 °C up to 160 °C).

According to the invention, one of the gears 7, 8, 14, 20 of the gear train (4) comprises a filled polymer material, for example a polyamide material, a polyphthalamide material or a polyphenylene sulphide material, and another gear 7, 8, 14, 20 of the gear train (4) comprises an unfilled polymer material, so as to withstand the stresses to which the gears are subjected.

Moreover, the valve actuator 1, in particular the gear train 4, is cheaper and simpler than an equivalent bevel gear arrangement arranged to translate rotation through 90 degrees as there is no need to accurately position the gears and the motor axially, making design, manufacture, assembly, and implementation simpler.

Moreover, advantageously, the meshing quality of the gears in the gear train 4 of the valve actuator 1 is not affected by the axial backlash of the motor shaft 5, which may be very significant. In contrast, a bevel gear arrangement, in particular the meshing quality, would be very susceptible to this backlash.

## Claims

1. A gear train (4) for a valve actuator (1) comprising a motor (2) and a valve shaft (3), the gear train (4) being configured to rotationally couple the motor (2) to the valve shaft (3), the gear train (4) comprising:
a motor gear (7) attachable to a motor shaft (5) of the motor (2);
a face gear (8) mountable such that a rotational axis (9) of the face gear (8) is perpendicular to a rotational axis (6) of the motor (2), the face gear (8) comprising an axially directed face gear portion (10) for engaging the motor gear (7);
an output gear (20) attachable to the valve shaft (3), the output gear (20) and valve shaft (3) being mountable such that a rotational axis (21) of the output gear (20) is parallel to the rotational axis (9) of the face gear (8); and
a pinion gear arrangement configured to rotationally couple the face gear (8) to the output gear (20); wherein
the output gear (20) comprises one or more end stops (26) engageable with a housing of the valve actuator (1) to limit rotation of the output gear (20) and valve shaft (3), and **characterised in that** the one or more end stops (26) are resiliently deformable, and wherein a gear (7, 8, 14, 20) of the gear train (4) comprises an unfilled polymer material and another gear (7, 8, 14, 20) of the gear train (4) comprises a filled polymer material.

2. The gear train of claim 1, wherein the face gear (8) further comprises a pinion gear (13); and wherein the pinion gear arrangement comprises an intermediate gear (14) having a first gear portion (17) engaged with the pinion gear (13) of the face gear (8), and a second gear portion (19) engaged with the output gear (20).

3. The gear train of claim 2, wherein the output gear (20) comprises a gear sector (22) extending only partly about a circumference of the output gear (20).

4. The gear train of claim 3, wherein the pinion gear (13), the first gear portion (17), and the second gear portion (19) each comprise a spur gear.

5. The gear train of any preceding claim, wherein the gear train (4) is configured to provide a gear ratio between the motor gear (7) and the output gear (20) of between approximately 1:3 and approximately 1:1000.

6. The gear train of any preceding claim, wherein the output gear (20) comprises a recess (24) for engaging a return spring (25) arranged to act between the recess (24) and a housing of the valve actuator (1) to urge the output gear (20) and valve shaft (3) in a rotational direction.

7. A valve actuator (1) comprising a motor (2), a valve shaft (3), and the gear train (4) of any preceding claim.

8. The valve actuator (1) of claim 7, wherein the valve shaft (3) comprises a magnet (28), and wherein the valve actuator (1) further comprises a sensor (29) arranged to detect the rotational position of the valve shaft (3) by detecting the magnet (28).

## Patentansprüche

1. Zahnradgetriebe (4) für einen Ventilaktuator (1), das einen Motor (2) und eine Ventilwelle (3) aufweist, wobei das Zahnradgetriebe (4) eingerichtet ist, um den Motor (2) drehbar mit der Ventilwelle (3) zu koppeln, wobei das Zahnradgetriebe (4) aufweist:
ein Motorzahnrad (7), das an einer Motorwelle (5) des Motors (2) anbringbar ist;
ein Kronenrad (8), das montierbar ist, sodass eine Drehachse (9) des Kronenrads (8) senkrecht zu einer Drehachse (6) des Motors (2) ist, wobei das Kronenrad (8) einen axial gerichteten Kronenradabschnitt (10) zum Eingreifen des Motorzahnrads (7) aufweist;
ein Ausgangszahnrad (20), das an der Ventilwelle (3) anbringbar ist, wobei das Ausgangszahnrad (20) und die Ventilwelle (3) montierbar sind, sodass eine Drehachse (21) des Ausgangszahnrads (20) parallel zu der Drehachse (9) des Kronenrads (8) ist; und
eine Ritzelanordnung, die eingerichtet ist, um das Kronenrad (8) drehbar mit dem Ausgangszahnrad (20) zu koppeln; wobei
das Ausgangszahnrad (20) einen oder mehrere Endanschläge (26) aufweist, die mit einem Gehäuse des Ventilaktuators (1) eingreifbar sind, um eine Drehung des Ausgangszahnrads (20) und der Ventilwelle (3) zu begrenzen, und **dadurch gekennzeichnet, dass** der eine oder die mehreren Endanschläge (26) elastisch verformbar sind, und wobei ein Zahnrad (7, 8, 14, 20) des Zahnradgetriebes (4) ein ungefülltes Polymermaterial aufweist und ein weiteres Zahnrad (7, 8, 14, 20) des Zahnradgetriebes (4) ein gefülltes Polymermaterial aufweist.

2. Zahnradgetriebe nach Anspruch 1, wobei das Kronenrad (8) ferner ein Ritzel (13) aufweist; und wobei die Ritzelanordnung ein Zwischenrad (14), das einen ersten Zahnradabschnitt (17) aufweist, der mit dem Ritzel (13) des Kronenrads (8) eingreift, und einen zweiten Zahnradabschnitt (19), der mit dem Ausgangszahnrad (20) eingreift, aufweist.

3. Zahnradgetriebe nach Anspruch 2, wobei das Ausgangszahnrad (20) einen Zahnradsektor (22) aufweist, der sich nur teilweise um einen Umfang des Ausgangszahnrads (20) erstreckt.

4. Zahnradgetriebe nach Anspruch 3, wobei das Ritzel (13), der erste Zahnradabschnitt (17) und der zweite Zahnradabschnitt (19) jeweils ein Stirnrad aufweisen.

5. Zahnradgetriebe nach einem der vorhergehenden Ansprüche, wobei das Zahnradgetriebe (4) eingerichtet ist, um ein Übersetzungsverhältnis zwischen dem Motorzahnrad (7) und dem Ausgangszahnrad (20) von zwischen ungefähr 1:3 und ungefähr 1:1000 bereitzustellen.

6. Zahnradgetriebe nach einem der vorhergehenden Ansprüche, wobei das Ausgangszahnrad (20) eine Aussparung (24) zum Eingreifen einer Rückstellfeder (25) aufweist, die angeordnet ist, um zwischen der Aussparung (24) und einem Gehäuse des Ventilaktuators (1) zu wirken, um das Ausgangszahnrad (20) und die Ventilwelle (3) in eine Drehrichtung zu zwingen.

7. Ventilaktuator (1), der einen Motor (2), eine Ventilwelle (3) und das Zahnradgetriebe (4) nach einem der vorhergehenden Ansprüche aufweist.

8. Ventilaktuator (1) nach Anspruch 7, wobei die Ventilwelle (3) einen Magneten (28) aufweist und wobei der Ventilaktuator (1) ferner einen Sensor (29) aufweist, der angeordnet ist, um die Drehposition der Ventilwelle (3) durch Erfassen des Magneten (28) zu erfassen.

## Revendications

1. Train d'engrenages (4) pour un actionneur de soupape (1) comprenant un moteur (2) et une tige de soupape (3), le train d'engrenages (4) étant configuré pour coupler en rotation le moteur (2) à la tige de soupape (3), le train d'engrenages (4) comprenant :
un engrenage de moteur (7) pouvant être fixé à un arbre moteur (5) du moteur (2) ;
un engrenage frontal (8) pouvant être monté de telle sorte qu'un axe de rotation (9) de l'engrenage frontal (8) est perpendiculaire à un axe de rotation (6) du moteur (2), l'engrenage frontal (8) comprenant une portion d'engrenage frontal (10) dirigée axialement pour venir en prise avec l'engrenage de moteur (7) ;
un engrenage de sortie (20) pouvant être fixé à la tige de soupape (3), l'engrenage de sortie (20) et la tige de soupape (3) pouvant être montés de telle sorte qu'un axe de rotation (21) de l'engrenage de sortie (20) est parallèle à l'axe de rotation (9) de l'engrenage frontal (8) ; et
un agencement de pignons configuré pour coupler en rotation l'engrenage frontal (8) à l'engrenage de sortie (20) ; dans lequel
l'engrenage de sortie (20) comprend une ou plusieurs butées d'extrémité (26) pouvant venir en prise avec un boîtier de l'actionneur de soupape (1) pour limiter la rotation de l'engrenage de sortie (20) et de la tige de soupape (3), et **caractérisé en ce que** les une ou plusieurs butées d'extrémité (26) sont déformables de manière élastique, et dans lequel un engrenage (7, 8, 14, 20) du train d'engrenages (4) comprend un matériau polymère non chargé et un autre engrenage (7, 8, 14, 20) du train d'engrenages (4) comprend un matériau polymère chargé.

2. Train d'engrenages selon la revendication 1, dans lequel l'engrenage frontal (8) comprend en outre un pignon (13) ; et dans lequel l'agencement de pignons comprend un engrenage intermédiaire (14) ayant une première portion d'engrenage (17) en prise avec le pignon (13) de l'engrenage frontal (8), et une deuxième portion d'engrenage (19) en prise avec l'engrenage de sortie (20).

3. Train d'engrenages selon la revendication 2, dans lequel l'engrenage de sortie (20) comprend un secteur d'engrenage (22) s'étendant seulement partiellement autour d'une circonférence de l'engrenage de sortie (20).

4. Train d'engrenages selon la revendication 3, dans lequel le pignon (13), la première portion d'engrenage (17) et la deuxième portion d'engrenage (19) comprennent chacun un engrenage cylindrique à denture droite.

5. Train d'engrenages selon une quelconque revendication précédente, dans lequel le train d'engrenages (4) est configuré pour fournir un rapport d'engrenages entre l'engrenage de moteur (7) et l'engrenage de sortie (20) d'entre approximativement 1:3 et approximativement 1:1000.

6. Train d'engrenages selon une quelconque revendication précédente, dans lequel l'engrenage de sortie (20) comprend un évidement (24) pour mettre en prise un ressort de rappel (25) agencé pour agir entre l'évidement (24) et un boîtier de l'actionneur de soupape (1) pour pousser l'engrenage de sortie (20) et la tige de soupape (3) dans un sens de rotation.

7. Actionneur de soupape (1) comprenant un moteur (2), une tige de soupape (3) et le train d'engrenages (4) selon une quelconque revendication précédente.

8. Actionneur de soupape (1) selon la revendication 7, dans lequel la tige de soupape (3) comprend un aimant (28), et dans lequel l'actionneur de soupape (1) comprend en outre un capteur (29) agencé pour détecter la position de rotation de la tige de soupape (3) en détectant l'aimant (28).
